# EUROPEAN PATENT APPLICATION

(11) **EP 4 790 457 A1**
(43) Date of publication of application: **12.08.2026**
(21) Application number: 26179945.6
(22) Date of filing: 20.05.2026
(51) Int. Cl.: G01S 13/86, G06V 20/58, G01S 13/58

(54) **UNCERTAINTY-BASED OBJECT DETECTION METHOD, ELECTRONIC DEVICE AND AUTONOMOUS DRIVING VEHICLE**

(30) Priority: 22.05.2025 CN 202510668214
(71) Applicant: Apollo Intelligent Driving Technology (Beijing) Co., Ltd., Haidian District Beijing 100085 (CN)
(72) Inventor: ZENG, Pengxin, Beijing, 100085 (CN); CHEN, Zhaowei, Beijing, 100085 (CN); DONG, Jiarong, Beijing, 100085 (CN)
(74) Representative: V.O.

(57) **Abstract**

The present disclosure provides an uncertainty-based object detection method, an uncertainty-based object detection apparatus, and an autonomous driving vehicle, which relates to the field of artificial intelligence technologies, and more particularly to the technical fields of image processing, computer vision, deep learning, and autonomous driving. One specific embodiment of the method includes: performing feature extraction on a radar point cloud and a surround-view image respectively, to obtain a point cloud bird's-eye view (BEV) feature and a visual BEV feature; performing uncertainty-based multi-modal feature fusion on the point cloud BEV feature and the visual BEV feature, to obtain a fused BEV feature; and performing object detection on the fused BEV feature, to obtain an object detection result.

## Description

### TECHNICAL FIELD

The present disclosure relates to the field of artificial intelligence technologies, and in particular, to the technical fields of image processing, computer vision, deep learning, and autonomous driving.

### BACKGROUND

With the development and commercialization of autonomous driving technologies, complex and dynamic application scenarios have imposed increasingly high requirements on the perception capability of autonomous vehicles. Existing autonomous driving perception solutions generally combine signals from a LiDAR (Light Detection and Ranging) and an RGB (Red Green Blue) camera to simultaneously capture spatial information such as the position and shape of objects, and semantic information such as color and contour, thereby initially achieving perception capability in complex scenarios.

However, both LiDAR and RGB cameras inevitably encounter scenarios with contaminated sensor signals. For example, raindrops, mud spot occlusion, and LiDAR blind spots may cause loss of LiDAR point clouds, leading to missed detection of obstacles. For another example, LiDAR may detect water mist and mistakenly identify it as an obstacle. Therefore, how to implement adaptive and robust multi-modal fusion perception to enhance the object detection capability of the model under conditions of contaminated sensor signals has become a research hotspot.

### SUMMARY

Embodiments of the present disclosure provide an uncertainty-based object detection method, an uncertainty-based object detection apparatus, and an autonomous driving vehicle.

In a first aspect, embodiments of the present disclosure provide a method for uncertainty-based object detection, including:
performing feature extraction on a radar point cloud and a surround-view image respectively, to obtain a point cloud bird's-eye view (BEV) feature and a visual BEV feature;
performing uncertainty-based multi-modal feature fusion on the point cloud BEV feature and the visual BEV feature, to obtain a fused BEV feature;
and performing object detection on the fused BEV feature, to obtain an object detection result.

In a second aspect, embodiments of the present disclosure provide a method for training a modal uncertainty estimator, including:
performing feature extraction on a sample radar point cloud and a sample surround-view image respectively, to obtain a sample point cloud BEV feature and a sample visual BEV feature;
inputting the sample point cloud BEV feature and the sample visual BEV feature into an estimator, to obtain a sample point cloud modal uncertainty map and a sample visual modal uncertainty map;
calculating a loss based on the sample point cloud modal uncertainty map and the sample visual modal uncertainty map;
and adjusting parameters of the estimator based on the loss, to obtain the modal uncertainty estimator.

In a third aspect, embodiments of the present disclosure provide an electronic device, including:
at least one processor;
and a memory communicatively coupled to the at least one processor;
where the memory stores instructions executable by the at least one processor, and the instructions when executed by the at least one processor cause the at least one processor to perform the method according to the first aspect or the second aspect.

In a fourth aspect, embodiments of the present disclosure provide a non-transitory computer-readable storage medium storing computer instructions, where the computer instructions are configured to cause a computer to perform the method according to the first aspect or the second aspect.

In a fifth aspect, embodiments of the present disclosure provide a computer program product including a computer program, where the computer program, when executed by a processor, implements the method according to the first aspect or the second aspect.

In a sixth aspect, embodiments of the present disclosure provide an autonomous driving vehicle, including the electronic device according to the fifth aspect.

The key or important features of the embodiments of the present disclosure are not intended to limit the scope of the present disclosure. Other features of the present disclosure will become readily understood from the following specification.

### BRIEF DESCRIPTION OF THE DRAWINGS

Other features, objects and advantages of the present disclosure will become more apparent from the detailed description of non-limiting embodiments made with reference to the accompanying drawings below. The accompanying drawings are provided for a better understanding of the present solution and do not constitute a limitation on the present disclosure. In the drawings:
FIG. 1 is a flow chart of an embodiment of the uncertainty-based object detection method according to the present disclosure;
FIG. 2 is a flow chart of another embodiment of the uncertainty-based object detection method according to the present disclosure;
FIG. 3 is a schematic structural diagram of an uncertainty-based object detection system;
FIG. 4 is a flow chart of an embodiment of the method for training a modal uncertainty estimator according to the present disclosure;
FIG. 5 is a flow chart of another embodiment of the method for training a modal uncertainty estimator according to the present disclosure;
FIG. 6 is a training block diagram of a modal uncertainty estimator;
FIG. 7 is a schematic structural diagram of an embodiment of the uncertainty-based object detection apparatus according to the present disclosure;
FIG. 8 is a schematic structural diagram of an embodiment of the apparatus for training a modal uncertainty estimator according to the present disclosure; and
FIG. 9 is a block diagram of an electronic device for implementing the uncertainty-based object detection method according to the embodiments of the present disclosure.

### DETAILED DESCRIPTION OF EMBODIMENTS

Exemplary embodiments of the present disclosure are described below with reference to the accompanying drawings, which include various details of the embodiments of the present disclosure to facilitate understanding, and should be considered as merely exemplary. Accordingly, those of ordinary skill in the art will recognize that various changes and modifications may be made to the embodiments described herein without departing from the scope and spirit of the present disclosure. Also, for clarity and conciseness, descriptions of well-known functions and structures are omitted in the following description.

It should be noted that the embodiments in the present disclosure and the features in the embodiments may be combined with each other without conflict. The present disclosure will be described in detail below with reference to the accompanying drawings and in conjunction with the embodiments.

At present, the following three solutions are generally adopted for robust multi-modal 3D object detection:
The first solution: Fusing 2D camera data and point cloud data at the BEV feature level to obtain a richer feature representation. This solution performs feature extraction on 2D camera data to obtain 3D surround-view features; projects the 3D surround-view features into the BEV feature space through spatial coordinate transformation to obtain visual BEV features; and fuses the visual BEV features with the point cloud BEV features extracted by the point cloud feature encoder through a convolutional neural network. Such fused features can fully utilize the information of different sensors and have certain practical significance. However, this solution uses a convolutional neural network for feature fusion, which lacks adaptive fusion capability, and cannot fully exert the perception capability of the visual modality in scenarios with raindrops, mud spot occlusion, and radar blind spots, leading to missed detection of obstacles.

The second solution: Directly fusing 3D surround-view features with point cloud BEV features without visual coordinate transformation. With a top-down detection paradigm, sparse detection 3D Queries are used to perform feature sampling on the 3D surround-view features and the point cloud BEV feature map corresponding to the coordinates, to obtain features of two modalities, and adaptive fusion weights are regressed according to the features of the two modalities for weighted feature fusion. This fusion solution can fully utilize the information of different sensors and has certain adaptive fusion capability, with good practical significance. However, this solution uses sparse detection 3D Queries to fuse the features of the two modalities of the radar and the camera, does not explicitly extract BEV features, has insufficient scalability, cannot support tasks such as OCC (Occupancy Network), and cannot meet the business requirements of autonomous driving.

The third solution: Directly initializing sparse detection 3D Queries based on point cloud BEV features without visual coordinate transformation, and performing feature sampling in the corresponding 3D surround-view features according to the spatial mapping relationship, and using the sampled features as multi-modal fusion features. This fusion solution can fully utilize the spatial information critical to 3D detection from the radar features, and fuse the corresponding visual semantic features, to achieve robust multi-modal fusion 3D detection. However, this solution uses radar BEV features to initialize sparse detection 3D Queries, which explicitly depends on the signal integrity of the radar sensor, and is difficult to cope with scenarios such as radar occlusion and radar blind spots, resulting in insufficient adaptive and robust multi-modal fusion perception.

Embodiments of the present disclosure provide an uncertainty-based robust multi-modal 3D object detection solution, which achieves robust information fusion of two sensors, namely a LiDAR and a surround-view camera. The quality of the BEV features of the corresponding modality is modeled through the foreground detection loss, which is used to weight the BEV features of the two modalities, thereby achieving adaptive and robust fusion perception, and further improving the complex scene perception capability of the autonomous vehicle.

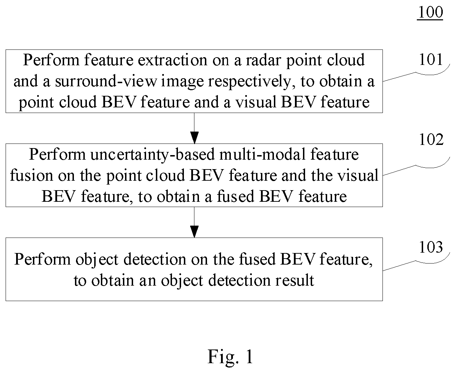

FIG. 1 shows a flow 100 of an embodiment of the uncertainty-based object detection method according to the present disclosure. The uncertainty-based object detection method comprises the following steps:
Step 101: Perform feature extraction on a radar point cloud and a surround-view image respectively, to obtain a point cloud BEV feature and a visual BEV feature.

In this embodiment, a LiDAR and a surround-view camera are installed on the autonomous vehicle. The radar point cloud collected by the LiDAR and the surround-view image collected by the surround-view camera are acquired, and feature extraction is performed on the radar point cloud and the surround-view image respectively, to obtain the point cloud BEV feature and the visual BEV feature.

An autonomous vehicle, also known as a self-driving vehicle, a computer-driven vehicle, or a wheeled mobile robot, is an intelligent vehicle that realizes autonomous driving through a computer system. To achieve autonomous driving, sensors such as a LiDAR and a surround-view camera need to be installed on the autonomous vehicle to collect environmental information around the autonomous vehicle, so as to detect obstacles around the autonomous vehicle, and then make decisions and plan a reasonable driving path to avoid the obstacles. The LiDAR may collect radar point clouds, and the surround-view camera may collect surround-view images.

BEV (Bird's Eye View) is a viewing angle for observing an object or a scene from above, just like a bird looking down at the ground from the air. In the field of autonomous driving, the information collected by the LiDAR and the surround-view camera may be converted into a BEV representation to facilitate object detection, path planning and other tasks. For example, the 3D radar point cloud collected by the LiDAR is first converted into a 2D bird's-eye view image in the bird's-eye viewing angle, and then feature extraction is performed to obtain the point cloud BEV feature. Similarly, the 3D surround-view image collected by the surround-view camera is first converted into a 2D bird's-eye view image in the bird's-eye viewing angle, and then feature extraction is performed to obtain the visual BEV feature.

Step 102: Perform uncertainty-based multi-modal feature fusion on the point cloud BEV feature and the visual BEV feature, to obtain a fused BEV feature.

In this embodiment, uncertainty-based multi-modal feature fusion may be performed on the point cloud BEV feature and the visual BEV feature, thereby obtaining the fused BEV feature. The uncertainty-based multi-modal feature fusion can achieve robust information fusion of the two sensors, namely the LiDAR and the surround-view camera. The uncertainty may be used to characterize the degree of uncertainty regarding whether the feature of each grid cell at the BEV scale is valid.

Step 103: Perform object detection on the fused BEV feature, to obtain an object detection result.

In this embodiment, object detection is performed on the fused BEV feature, and the object detection result may be obtained. Performing object detection on the fused BEV feature can fully realize adaptive and robust multi-modal fusion perception, and effectively enhance the object detection capability of the model under the condition of sensor contamination.

It should be noted that the multi-modal fusion is performed in the BEV space, and the BEV features may be explicitly output. In addition to supporting the 3D object detection task, it can also be flexibly extended to support perception tasks such as OCC, which effectively improves the practical value.

Embodiments of the present disclosure provide an uncertainty-based robust multi-modal 3D object detection solution, which achieves robust information fusion of two sensors, namely a LiDAR and a surround-view camera, and effectively enhances the object detection capability of the model under the condition of sensor signal contamination.

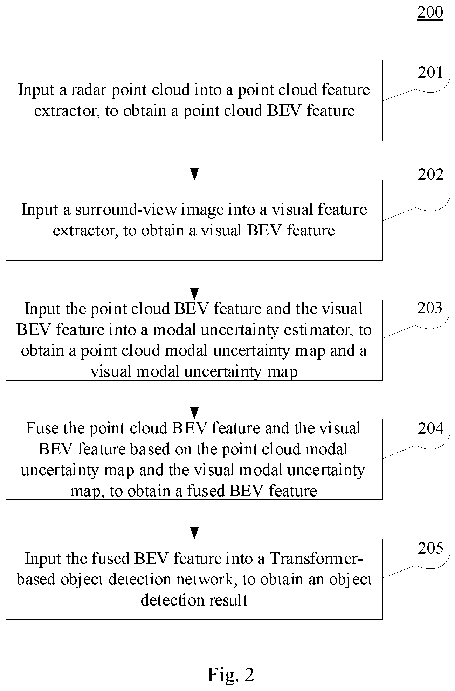

With continued reference to FIG. 2, it shows a flow 200 of another embodiment of the uncertainty-based object detection method according to the present disclosure. The uncertainty-based object detection method comprises the following steps:
Step 201: Input a radar point cloud into a point cloud feature extractor, to obtain a point cloud BEV feature.

In this embodiment, a LiDAR is installed on the autonomous vehicle. The radar point cloud collected by the LiDAR is acquired, and the radar point cloud is input into the point cloud feature extractor, to obtain the point cloud BEV feature.

An autonomous vehicle, also known as a self-driving vehicle, a computer-driven vehicle, or a wheeled mobile robot, is an intelligent vehicle that realizes autonomous driving through a computer system. To achieve autonomous driving, sensors such as a LiDAR and a surround-view camera need to be installed on the autonomous vehicle to collect environmental information around the autonomous vehicle, so as to detect obstacles around the autonomous vehicle, and then make decisions and plan a reasonable driving path to avoid the obstacles. The LiDAR may collect radar point clouds, and the surround-view camera may collect surround-view images.

The BEV is a viewing angle for observing an object or a scene from above, just like a bird looking down at the ground from the air. In the field of autonomous driving, the information collected by the LiDAR and the surround-view camera may be converted into a BEV representation to facilitate object detection, path planning and other tasks. For example, the radar point cloud is input into the point cloud feature extractor, and the point cloud BEV feature may be obtained. The point cloud feature extractor may first convert the 3D radar point cloud into a 2D bird's-eye view image in the bird's-eye viewing angle, and then perform feature extraction, thereby obtaining the point cloud BEV feature.

Step 202: Input a surround-view image into a visual feature extractor, to obtain a visual BEV feature.

In this embodiment, a surround-view camera is installed on the autonomous vehicle. The surround-view image collected by the surround-view camera is acquired, and the surround-view image is input into the visual feature extractor, to obtain the visual BEV feature. The visual feature extractor may first convert the 3D surround-view image into a 2D bird's-eye view image in the bird's-eye viewing angle, and then perform feature extraction, thereby obtaining the visual BEV feature.

Step 203: Input the point cloud BEV feature and the visual BEV feature into a modal uncertainty estimator, to obtain a point cloud modal uncertainty map and a visual modal uncertainty map.

In this embodiment, the point cloud BEV feature and the visual BEV feature are input into the modal uncertainty estimator, and the point cloud modal uncertainty map and the visual modal uncertainty map can be obtained. The modal uncertainty map may be used to characterize the degree of uncertainty regarding whether the feature of each grid cell in the BEV scale is valid.

The modal uncertainty estimator may perform vector extraction on the BEV features based on the modal uncertainty. The modal uncertainty estimator may generate two paths of uncertainty maps for the two modalities respectively, which are used to model the certainty of the modal features, realize adaptive fusion of the modal features of the LiDAR and the surround-view camera, and enhance the robustness to the scenario of contaminated sensor signals.

In some embodiments, the modal uncertainty estimator may perform convolution on the point cloud BEV feature and the visual BEV feature respectively, to obtain the point cloud modal uncertainty map and the visual modal uncertainty map. Specifically, the modal uncertainty estimator may project the BEV feature F ∈ *R^{H, W, C}* into the modal uncertainty map f ∈ *R*^{*H, W,* 1} through a convolutional neural network.

Step 204: Fuse the point cloud BEV feature and the visual BEV feature based on the point cloud modal uncertainty map and the visual modal uncertainty map, to obtain a fused BEV feature.

In this embodiment, the point cloud BEV feature and the visual BEV feature may be fused based on the point cloud modal uncertainty map and the visual modal uncertainty map, to obtain the fused BEV feature.

The modal uncertainty map is projected into the BEV feature space to perform feature fusion with the two modalities of the LiDAR and the surround-view camera, thereby supporting fine-grained feature adaptive fusion in the BEV space and effectively ensuring the fine-grained detection capability.

In some embodiments, the point cloud modal uncertainty map and the visual modal uncertainty map are used as weights to perform weighted summation on the point cloud BEV feature and the visual BEV feature, to obtain the fused BEV feature. That is, the point cloud modal uncertainty map is used as a weight to multiply with the point cloud BEV feature, the visual modal uncertainty map is used as a weight to multiply with the visual BEV feature, and the sum of the two products is calculated, thereby completing the fusion of the point cloud BEV feature and the visual BEV feature.

Step 205: Input the fused BEV feature into a Transformer-based object detection network, to obtain an object detection result.

In this embodiment, the fused BEV feature is input into DETR (End-to-End Object Detection with Transformers), and the object detection result may be obtained.

DETR is an end-to-end object detection network based on Transformer, which can realize end-to-end object detection without predefined prior anchors and without the post-processing strategy of NMS (Non-Maximum Suppression). DETR may include a Transformer encoder-decoder. The fused BEV feature is input into the Transformer encoder-decoder, the structure of which is basically the same as that of the Transformer, with modifications mainly in the input part and the output part; finally, the prediction of the category and the bbox (Bounding box) is obtained, and the loss is calculated through bipartite matching to optimize the network.

Embodiments of the present disclosure provide an uncertainty-based robust multi-modal 3D object detection solution, which achieves robust information fusion of two sensors, namely a LiDAR and a surround-view camera. Based on the BEV features of the two modalities of the LiDAR and the surround-view camera, a modal uncertainty estimator is used to generate two paths of uncertainty maps for the two modalities respectively, which are used to model the certainty of the modal features. The two paths of uncertainty maps are used to weight the BEV features of the two modalities, thereby realizing adaptive fusion and enhancing the robustness to the scenario of sensor contamination. In the scenario of contaminated sensor signals, the perception capability of other modalities may be adaptively exerted to successfully detect the corresponding obstacles. In the scenario of contaminated visual sensor signals such as water stains and night, the perception capability of the radar branch may be adaptively exerted to successfully detect the corresponding obstacles. The adaptive and robust multi-modal fusion perception is fully realized, the object detection capability of the model under the condition of contaminated sensor signals is effectively enhanced, and the robust perception capability of the autonomous vehicle is further improved.

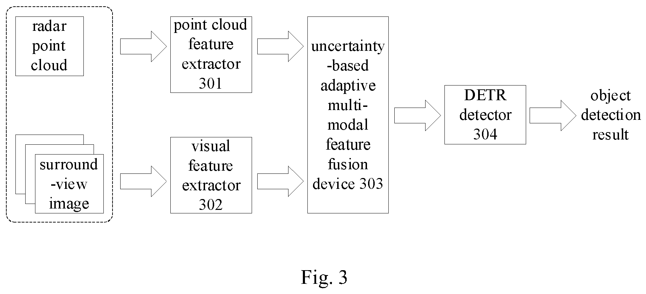

FIG. 3 shows a schematic structural diagram of an uncertainty-based object detection system. As shown in FIG. 3, the uncertainty-based robust multi-modal 3D object detection solution may be composed of four modules: a point cloud feature extractor 301, a visual feature extractor 302, an uncertainty-based adaptive multi-modal feature fusion device 303, and a DETR detector 304. The radar point cloud is input into the point cloud feature extractor 301 for feature extraction, and the point cloud BEV feature may be obtained. The surround-view image is input into the visual feature extractor 302 for feature extraction, and the visual BEV feature is obtained. The point cloud BEV feature and the visual BEV feature are input into the uncertainty-based adaptive multi-modal feature fusion device 303 for feature fusion, and the fused BEV feature may be obtained. The fused BEV feature is input into the DETR detector 304 for detection, and the object detection result can be obtained.

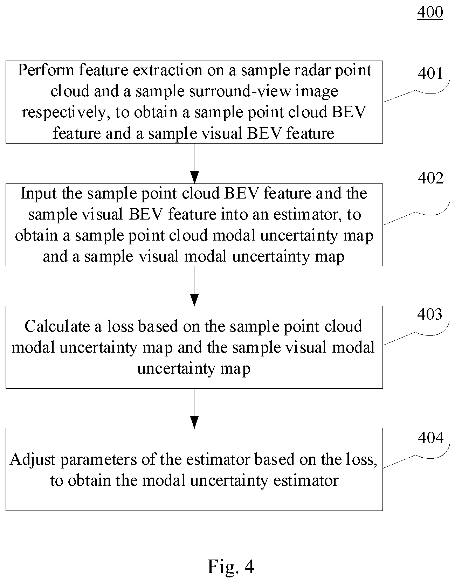

With further reference to FIG. 4, it shows a flow 400 of an embodiment of the method for training a modal uncertainty estimator according to the present disclosure. The method for training a modal uncertainty estimator comprises the following steps:
Step 401: Perform feature extraction on a sample radar point cloud and a sample surround-view image respectively, to obtain a sample point cloud BEV feature and a sample visual BEV feature.

In this embodiment, a LiDAR and a surround-view camera are installed on the autonomous vehicle. The sample radar point cloud collected by the LiDAR and the sample surround-view image collected by the surround-view camera are acquired, and feature extraction is performed on the sample radar point cloud and the sample surround-view image respectively, to obtain the sample point cloud BEV feature and the sample visual BEV feature.

For example, the 3D sample radar point cloud collected by the LiDAR is first converted into a 2D bird's-eye view image in the bird's-eye viewing angle, and then feature extraction is performed to obtain the sample point cloud BEV feature. Similarly, the 3D sample surround-view image collected by the surround-view camera is first converted into a 2D bird's-eye view image in the bird's-eye viewing angle, and then feature extraction is performed to obtain the sample visual BEV feature.

In some embodiments, the sample radar point cloud is input into the point cloud feature extractor, and the sample visual BEV feature is obtained. The sample surround-view image is input into the visual feature extractor, and the sample visual BEV feature is obtained. The point cloud feature extractor may first convert the 3D sample radar point cloud into a 2D bird's-eye view image in the bird's-eye viewing angle, and then perform feature extraction, thereby obtaining the sample point cloud BEV feature. The visual feature extractor may first convert the 3D sample surround-view image into a 2D bird's-eye view image in the bird's-eye viewing angle, and then perform feature extraction, thereby obtaining the sample visual BEV feature.

Step 402: Input the sample point cloud BEV feature and the sample visual BEV feature into an estimator, to obtain a sample point cloud modal uncertainty map and a sample visual modal uncertainty map.

In this embodiment, the sample point cloud BEV feature and the sample visual BEV feature are input into the estimator, and the sample point cloud modal uncertainty map and the sample visual modal uncertainty map may be obtained. The modal uncertainty map may be used to characterize the degree of uncertainty regarding whether the feature of each grid cell in the BEV scale is valid.

The estimator may be an initialized convolutional neural network, which can perform vector extraction on the BEV features based on the modal uncertainty. The estimator can predict two paths of uncertainty maps for the two modalities respectively. For example, the estimator can project the BEV feature F ∈ *R^{H, W, C}* into the modal uncertainty map f ∈ *R*^{*H, W,* 1} through a convolutional neural network.

Step 403: Calculate a loss based on the sample point cloud modal uncertainty map and the sample visual modal uncertainty map.

In this embodiment, the loss may be calculated based on the sample point cloud modal uncertainty map and the sample visual modal uncertainty map. The loss may include a point cloud mean square error (MSE) loss and a visual MSE loss. The point cloud MSE loss may be calculated based on the sample point cloud modal uncertainty map, and the visual MSE loss may be calculated based on the sample visual modal uncertainty map.

Step 404: Adjust parameters of the estimator based on the loss, to obtain the modal uncertainty estimator.

In this embodiment, the parameters of the estimator are adjusted based on the loss, to obtain the modal uncertainty estimator. Specifically, based on the loss value, the estimator is optimized using SGD (Stochastic Gradient Descent) until the loss value is sufficiently small, thereby obtaining the modal uncertainty estimator.

Embodiments of the present disclosure provide a method for training a modal uncertainty estimator. The trained modal uncertainty estimator can generate two paths of uncertainty maps for the two modalities respectively based on the BEV features of the two modalities of the LiDAR and the surround-view camera, which are used to model the certainty of the modal features.

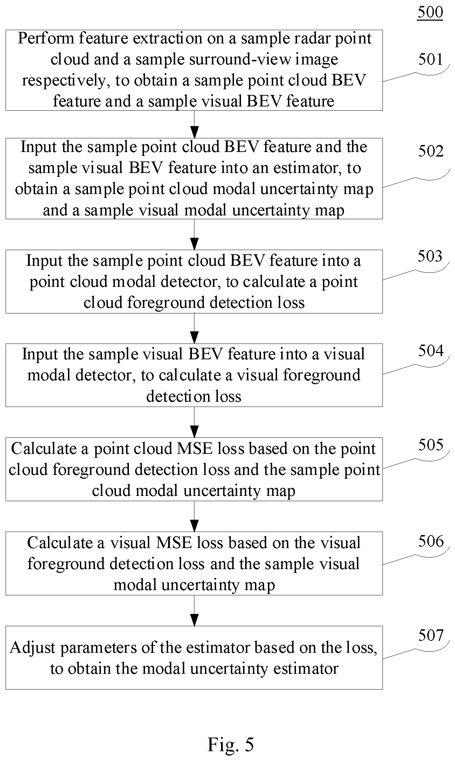

With further reference to FIG. 5, it shows a flow 500 of another embodiment of the method for training a modal uncertainty estimator according to the present disclosure. The method for training a modal uncertainty estimator comprises the following steps:
Step 501: Perform feature extraction on a sample radar point cloud and a sample surround-view image respectively, to obtain a sample point cloud BEV feature and a sample visual BEV feature.

In this embodiment, a LiDAR and a surround-view camera are installed on the autonomous vehicle. The sample radar point cloud collected by the LiDAR and the sample surround-view image collected by the surround-view camera are acquired, and feature extraction is performed on the sample radar point cloud and the sample surround-view image respectively, to obtain the sample point cloud BEV feature and the sample visual BEV feature.

For example, the 3D sample radar point cloud collected by the LiDAR is first converted into a 2D bird's-eye view image in the bird's-eye viewing angle, and then feature extraction is performed to obtain the sample point cloud BEV feature. Similarly, the 3D sample surround-view image collected by the surround-view camera is first converted into a 2D bird's-eye view image in the bird's-eye viewing angle, and then feature extraction is performed to obtain the sample visual BEV feature.

In some embodiments, the sample radar point cloud is input into the point cloud feature extractor, and the sample visual BEV feature is obtained. The sample surround-view image is input into the visual feature extractor, and the sample visual BEV feature is obtained. The point cloud feature extractor may first convert the 3D sample radar point cloud into a 2D bird's-eye view image in the bird's-eye viewing angle, and then perform feature extraction, thereby obtaining the sample point cloud BEV feature. The visual feature extractor may first convert the 3D sample surround-view image into a 2D bird's-eye view image in the bird's-eye viewing angle, and then perform feature extraction, thereby obtaining the sample visual BEV feature.

Step 502: Input the sample point cloud BEV feature and the sample visual BEV feature into an estimator, to obtain a sample point cloud modal uncertainty map and a sample visual modal uncertainty map.

In this embodiment, the sample point cloud BEV feature and the sample visual BEV feature are input into the estimator, and the sample point cloud modal uncertainty map and the sample visual modal uncertainty map may be obtained. The modal uncertainty map may be used to characterize the degree of uncertainty regarding whether the feature of each grid cell in the BEV scale is valid.

The estimator may be an initialized convolutional neural network, which can perform vector extraction on the BEV features based on the modal uncertainty. The estimator can predict two paths of uncertainty maps for the two modalities respectively. For example, the estimator can project the BEV feature F ∈ *R^{H, W, C}* into the modal uncertainty map f ∈ *R*^{*H, W,* 1} through a convolutional neural network.

Step 503: Input the sample point cloud BEV feature into a point cloud modal detector, to calculate a point cloud foreground detection loss.

In this embodiment, the sample point cloud BEV feature is input into the point cloud modal detector, and the point cloud foreground detection loss may be calculated. The point cloud modal detector may be a DETR detector.

Inspired by the DETR detector, the structure of the point cloud modal detector may be split into two parts: a heatmap encoder and an object detector. The heatmap encoder may generate an existence map (H×W×1) based on the BEV features, to represent the probability of an object existing in each region. The object detector can detect the category and size of the object in the corresponding region. Then, the existence map is activated by an activation function, and the foreground detection loss is calculated using cross entropy.

In some embodiments, the point cloud foreground detection loss may be calculated through the following steps:
First, split the point cloud modal detector into a point cloud heatmap encoder and a point cloud object detector.

Then, input the sample point cloud BEV feature into the point cloud heatmap encoder, to obtain a sample point cloud modal existence map.

Finally, after activating the point cloud modal existence map through an activation function, calculate the point cloud foreground detection loss using cross entropy.

Step 504: Input the sample visual BEV feature into a visual modal detector, to calculate a visual foreground detection loss.

In this embodiment, the sample visual BEV feature is input into the visual modal detector, and the visual foreground detection loss may be calculated. The visual modal detector may be a DETR detector.

In some embodiments, the visual foreground detection loss may be calculated through the following steps:
First, split the visual modal detector into a visual heatmap encoder and a visual object detector.

Then, input the sample visual BEV feature into the visual heatmap encoder, to obtain a sample visual modal existence map.

Finally, after activating the visual modal existence map through an activation function, calculate the visual foreground detection loss using cross entropy.

Step 505: Calculate a point cloud MSE loss based on the point cloud foreground detection loss and the sample point cloud modal uncertainty map.

In this embodiment, the point cloud MSE loss may be calculated based on the point cloud foreground detection loss and the sample point cloud modal uncertainty map. The point cloud foreground detection loss may be used as a supervision signal of the modal uncertainty estimator, and the point cloud MSE loss is calculated with the prediction result of the estimator.

Step 506: Calculate a visual MSE loss based on the visual foreground detection loss and the sample visual modal uncertainty map.

In this embodiment, the visual MSE loss may be calculated based on the visual foreground detection loss and the sample visual modal uncertainty map. The visual foreground detection loss may be used as a supervision signal of the modal uncertainty estimator, and the visual MSE loss is calculated with the prediction result of the estimator.

Step 507: Adjust parameters of the estimator based on the loss, to obtain the modal uncertainty estimator.

In this embodiment, the parameters of the estimator are adjusted based on the loss, to obtain the modal uncertainty estimator. Specifically, based on the loss value, the estimator is optimized using SGD until the loss value is sufficiently small, thereby obtaining the modal uncertainty estimator.

Embodiments of the present disclosure provide a method for training a modal uncertainty estimator. The modal uncertainty estimator is directly supervised and trained by the foreground detection loss, which effectively ensures the accuracy and validity of the uncertainty map. In addition, the quality of the BEV features of the corresponding modality is modeled through the foreground detection loss, which is used to weight the BEV features of the two modalities, thereby realizing adaptive and robust fusion perception, and further improving the complex scene perception capability of the autonomous vehicle.

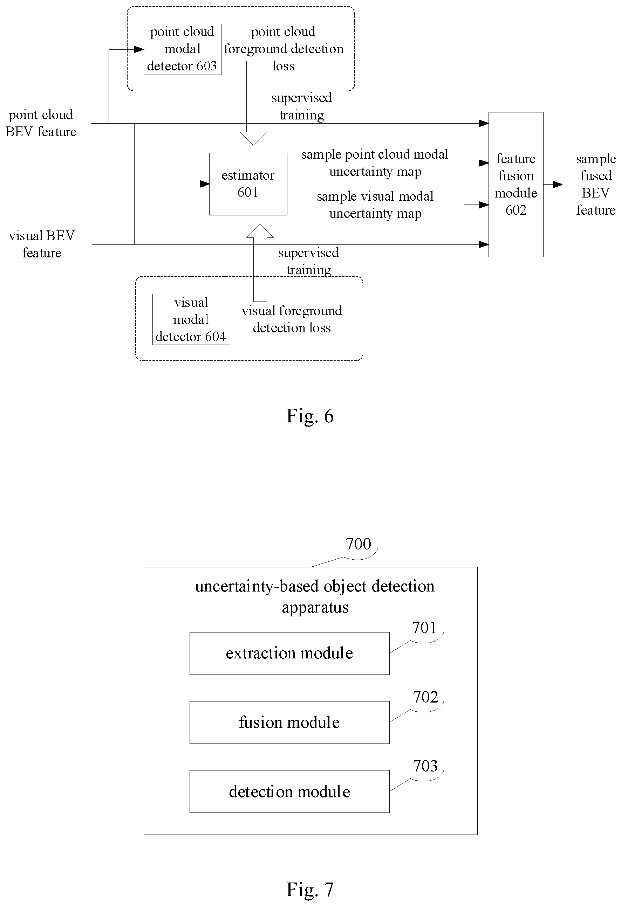

FIG. 6 shows a training block diagram of a modal uncertainty estimator. As shown in FIG. 6, the sample point cloud BEV feature and the sample visual BEV feature are input into the estimator 601, and the sample point cloud modal uncertainty map and the sample visual modal uncertainty map are obtained. The sample point cloud modal uncertainty map and the visual modal uncertainty map are input into the feature fusion module 602, and the sample fused BEV feature is obtained. The sample point cloud BEV feature is input into the point cloud modal detector 603, and the point cloud foreground detection loss is calculated. The sample visual BEV feature is input into the visual modal detector 604, and the visual foreground detection loss is calculated. The point cloud foreground detection loss and the visual foreground detection loss are used as supervision signals, the MSE loss is calculated with the output result of the estimator 601, and the estimator 601 is optimized using SGD, thereby obtaining the modal uncertainty estimator.

With further reference to FIG. 7, as an implementation of the methods shown in the above figures, the present disclosure provides an embodiment of an uncertainty-based object detection apparatus. The apparatus embodiment corresponds to the method embodiment shown in FIG. 1, and the apparatus may be specifically applied to various electronic devices.

As shown in FIG. 7, the uncertainty-based object detection apparatus 700 of this embodiment may include: an extraction module 701, a fusion module 702, and a detection module 703. The extraction module 701 is configured to perform feature extraction on a radar point cloud and a surround-view image respectively, to obtain a point cloud BEV feature and a visual BEV feature; the fusion module 702 is configured to perform uncertainty-based multi-modal feature fusion on the point cloud BEV feature and the visual BEV feature, to obtain a fused BEV feature; and the detection module 703 is configured to perform object detection on the fused BEV feature, to obtain an object detection result.

In this embodiment, for the specific processing of the extraction module 701, the fusion module 702, and the detection module 703 in the uncertainty-based object detection apparatus 700, and the technical effects brought thereby, reference may be made to the relevant descriptions of steps 101-103 in the corresponding embodiment of FIG. 3, which will not be repeated here.

In some optional implementations of this embodiment, the fusion module 702 includes: an estimation sub-module configured to input the point cloud BEV feature and the visual BEV feature into a modal uncertainty estimator, to obtain a point cloud modal uncertainty map and a visual modal uncertainty map; and a fusion sub-module configured to fuse the point cloud BEV feature and the visual BEV feature based on the point cloud modal uncertainty map and the visual modal uncertainty map, to obtain the fused BEV feature.

In some optional implementations of this embodiment, the estimation sub-module is further configured to: perform convolution on the point cloud BEV feature and the visual BEV feature respectively, to obtain the point cloud modal uncertainty map and the visual modal uncertainty map.

In some optional implementations of this embodiment, the fusion sub-module is further configured to: perform weighted summation on the point cloud BEV feature and the visual BEV feature by taking the point cloud modal uncertainty map and the visual modal uncertainty map as weights, to obtain the fused BEV feature.

In some optional implementations of this embodiment, the extraction module 701 is further configured to: input the radar point cloud into a point cloud feature extractor, to obtain the point cloud BEV feature; and input the surround-view image into a visual feature extractor, to obtain the visual BEV feature.

In some optional implementations of this embodiment, the detection module 703 is further configured to: input the fused BEV feature into a Transformer-based object detection network, to obtain the object detection result.

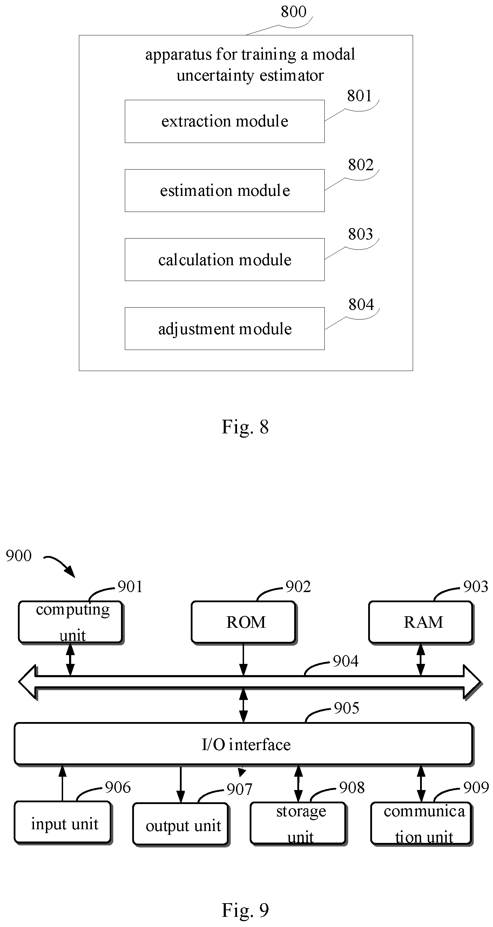

With further reference to FIG. 8, as an implementation of the methods shown in the above figures, the present disclosure provides an embodiment of an apparatus for training a modal uncertainty estimator. The apparatus embodiment corresponds to the method embodiment shown in FIG. 4, and the apparatus may be specifically applied to various electronic devices.

As shown in FIG. 8, the apparatus 800 for training a modal uncertainty estimator of this embodiment may include: an extraction module 801, an estimation module 802, a calculation module 803, and an adjustment module 804. The extraction module 801 is configured to perform feature extraction on a sample radar point cloud and a sample surround-view image respectively, to obtain a sample point cloud BEV feature and a sample visual BEV feature; the estimation module 802 is configured to input the sample point cloud BEV feature and the sample visual BEV feature into an estimator, to obtain a sample point cloud modal uncertainty map and a sample visual modal uncertainty map; the calculation module 803 is configured to calculate a loss based on the sample point cloud modal uncertainty map and the sample visual modal uncertainty map; the adjustment module 804 is configured to adjust parameters of the estimator based on the loss, to obtain the modal uncertainty estimator.

In this embodiment, for the specific processing of the extraction module 801, the estimation module 802, the calculation module 803, and the adjustment module 804 in the apparatus 800 for training a modal uncertainty estimator, and the technical effects brought thereby, reference may be made to the relevant descriptions of steps 401-404 in the corresponding embodiment of FIG. 4, which will not be repeated here.

In some optional implementations of this embodiment, the loss includes a point cloud MSE loss and a visual MSE loss.

In some optional implementations of this embodiment, the calculation module 803 includes: a first calculation sub-module configured to input the sample point cloud BEV feature into a point cloud modal detector, to calculate a point cloud foreground detection loss; a second calculation sub-module configured to input the sample visual BEV feature into a visual modal detector, to calculate a visual foreground detection loss; a third calculation sub-module configured to calculate the point cloud MSE loss based on the point cloud foreground detection loss and the sample point cloud modal uncertainty map; and a fourth calculation sub-module configured to calculate the visual MSE loss based on the visual foreground detection loss and the sample visual modal uncertainty map.

In some optional implementations of this embodiment, the first calculation sub-module is further configured to: split the point cloud modal detector into a point cloud heatmap encoder and a point cloud object detector; input the sample point cloud BEV feature into the point cloud heatmap encoder, to obtain a sample point cloud modal existence map; and after activating the point cloud modal existence map through an activation function, calculate the point cloud foreground detection loss using cross entropy.

In some optional implementations of this embodiment, the second calculation sub-module is further configured to: split the visual modal detector into a visual heatmap encoder and a visual object detector; input the sample visual BEV feature into the visual heatmap encoder, to obtain a sample visual modal existence map; and after activating the visual modal existence map through an activation function, calculate the visual foreground detection loss using cross entropy.

In the technical solutions of the present disclosure, the acquisition, storage, application and other processing of the user's personal information all comply with the provisions of relevant laws and regulations, and do not violate public order and good customs.

According to the embodiments of the present disclosure, the present disclosure also provides an electronic device, a readable storage medium, a computer program product, and an autonomous driving vehicle. The autonomous driving vehicle may include the electronic device. The electronic device may include at least one processor, configured to execute the uncertainty-based object detection method to obtain an object detection result. Based on the object detection result, a driving path of the autonomous driving vehicle may be planned. The autonomous driving vehicle drives along the driving path, and can smoothly reach the destination while avoiding obstacles.

FIG. 9 shows a schematic block diagram of an example electronic device 900 that may be used to implement the embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile devices, such as personal digital processors, cellular phones, smart phones, wearable devices, and other similar computing devices. The components shown herein, their connections and relationships, and their functions are merely examples, and are not intended to limit the implementation of the present disclosure described and/or claimed herein.

As shown in FIG. 9, the device 900 includes a computing unit 901, which can perform various appropriate actions and processes according to a computer program stored in a read-only memory (ROM) 902 or a computer program loaded from a storage unit 908 into a random access memory (RAM) 903. Various programs and data required for the operation of the device 900 may also be stored in the RAM 903. The computing unit 901, the ROM 902, and the RAM 903 are connected to each other through a bus 904. An input/output (I/O) interface 905 is also connected to the bus 904.

Multiple components in the device 900 are connected to the I/O interface 905, including: an input unit 906, such as a keyboard, a mouse, etc.; an output unit 907, such as various types of displays, speakers, etc.; a storage unit 908, such as a magnetic disk, an optical disk, etc.; and a communication unit 909, such as a network card, a modem, a wireless communication transceiver, etc. The communication unit 909 allows the device 900 to exchange information/data with other devices through a computer network such as the Internet and/or various telecommunication networks.

The computing unit 901 may be various general-purpose and/or special-purpose processing components with processing and computing capabilities. Some examples of the computing unit 901 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 901 executes the various methods and processes described above, such as the uncertainty-based object detection method. For example, in some embodiments, the uncertainty-based object detection method may be implemented as a computer software program, which is tangibly contained in a machine-readable medium, such as the storage unit 908. In some embodiments, part or all of the computer program may be loaded and/or installed on the device 900 via the ROM 902 and/or the communication unit 909. When the computer program is loaded into the RAM 903 and executed by the computing unit 901, one or more steps of the uncertainty-based object detection method described above can be executed. Alternatively, in other embodiments, the computing unit 901 may be configured to execute the uncertainty-based object detection method by any other appropriate means (e.g., by means of firmware).

Various implementations of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or combinations thereof. These various implementations may include: implementation in one or more computer programs, which may be executed and/or interpreted on a programmable system including at least one programmable processor, which may be a special-purpose or general-purpose programmable processor, and may receive data and instructions from a storage system, at least one input device, and at least one output device, and transmit data and instructions to the storage system, the at least one input device, and the at least one output device.

The program code for implementing the method of the present disclosure may be written in any combination of one or more programming languages. These program codes may be provided to a processor or controller of a general-purpose computer, a special-purpose computer, or other programmable data processing devices, so that when the program codes are executed by the processor or controller, the functions/operations specified in the flow charts and/or block diagrams are implemented. The program codes may be executed entirely on the machine, partially on the machine, as an independent software package partially on the machine and partially on the remote machine, or entirely on the remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer disk, a hard disk, a Random Access Memory (RAM), a Read-Only Memory (ROM), an Erasable Programmable Read-Only Memory (EPROM, or flash memory), an optical fiber, a portable Compact Disc Read-Only Memory (CD-ROM), an optical storage device, a magnetic storage device, or any suitable combination of the foregoing.

To provide interaction with a user, the systems and techniques described herein may be implemented on a computer having: a display device for displaying information to the user (e.g., a CRT (Cathode Ray Tube) or LCD (Liquid Crystal Display) monitor); and a keyboard and a pointing device (e.g., a mouse or a trackball), through which the user may provide input to the computer. Other types of devices may also be used to provide interaction with the user; for example, the feedback provided to the user may be any form of sensory feedback (e.g., visual feedback, auditory feedback, or tactile feedback); and input from the user may be received in any form, including acoustic input, voice input, or tactile input.

The systems and techniques described herein may be implemented in a computing system including backend components (e.g., as a data server), or a computing system including middleware components (e.g., an application server), or a computing system including frontend components (e.g., a user computer with a graphical user interface (GUI) or a web browser, through which the user may interact with the implementations of the systems and techniques described herein), or a computing system including any combination of such backend, middleware, and frontend components. The components of the system may be interconnected through any form or medium of digital data communication (e.g., a communication network). Examples of communication networks include: a Local Area Network (LAN), a Wide Area Network (WAN), and the Internet.

A computer system may include a client and a server. The client and the server are generally remote from each other and typically interact through a communication network. The client-server relationship is created by computer programs running on the respective computers and having a client-server relationship with each other. The server may be a cloud server, a server of a distributed system, or a server integrated with blockchain technology.

It should be understood that the steps of reordering, adding or deleting may be performed using the various forms of flows shown above. For example, the steps described in the present disclosure may be executed in parallel, sequentially, or in a different order, so long as the desired results of the technical solutions disclosed in the present disclosure can be achieved, and no limitation is imposed herein.

The foregoing detailed description is not intended to limit the scope of the present disclosure. It will be appreciated by those skilled in the art that various modifications, combinations, sub-combinations, and substitutions may be made depending on design requirements and other factors. Any modifications, equivalents, and improvements made within the spirit and principles of the present disclosure shall be included within the scope of protection of the present disclosure.

## Claims

1. A method for uncertainty-based object detection, comprising:
performing (101) feature extraction on a radar point cloud and a surround-view image respectively, to obtain a point cloud bird's-eye view (BEV) feature and a visual BEV feature;
performing (102) uncertainty-based multi-modal feature fusion on the point cloud BEV feature and the visual BEV feature, to obtain a fused BEV feature; and
performing (103) object detection on the fused BEV feature, to obtain an object detection result.

2. The method of claim 1, wherein the performing uncertainty-based multi-modal feature fusion on the point cloud BEV feature and the visual BEV feature to obtain the fused BEV feature comprises:
inputting (203) the point cloud BEV feature and the visual BEV feature into a modal uncertainty estimator, to obtain a point cloud modal uncertainty map and a visual modal uncertainty map; and
fusing (204) the point cloud BEV feature and the visual BEV feature based on the point cloud modal uncertainty map and the visual modal uncertainty map, to obtain the fused BEV feature.

3. The method of claim 2, wherein the inputting the point cloud BEV feature and the visual BEV feature into the modal uncertainty estimator to obtain the point cloud modal uncertainty map and the visual modal uncertainty map comprises:
performing convolution on the point cloud BEV feature and the visual BEV feature respectively, to obtain the point cloud modal uncertainty map and the visual modal uncertainty map.

4. The method of claim 2, wherein the fusing the point cloud BEV feature and the visual BEV feature based on the point cloud modal uncertainty map and the visual modal uncertainty map to obtain the fused BEV feature comprises:
performing weighted summation on the point cloud BEV feature and the visual BEV feature by taking the point cloud modal uncertainty map and the visual modal uncertainty map as weights, to obtain the fused BEV feature.

5. The method of claim 1, wherein the performing feature extraction on the radar point cloud and the surround-view image respectively to obtain the point cloud BEV feature and the visual BEV feature comprises:
inputting (201) the radar point cloud into a point cloud feature extractor (301), to obtain the point cloud BEV feature; and
inputting (202) the surround-view image into a visual feature extractor (303), to obtain the visual BEV feature.

6. The method of claim 1, wherein the performing object detection on the fused BEV feature to obtain the object detection result comprises:
inputting (205) the fused BEV feature into a transformer-based object detection network, to obtain the object detection result.

7. A method for training a modal uncertainty estimator, comprising:
performing (401) feature extraction on a sample radar point cloud and a sample surround-view image respectively, to obtain a sample point cloud BEV feature and a sample visual BEV feature;
inputting (402) the sample point cloud BEV feature and the sample visual BEV feature into an estimator (601), to obtain a sample point cloud modal uncertainty map and a sample visual modal uncertainty map;
calculating (403) a loss based on the sample point cloud modal uncertainty map and the sample visual modal uncertainty map; and
adjusting (404) parameters of the estimator based on the loss, to obtain the modal uncertainty estimator.

8. The method of claim 7, wherein the loss comprises a point cloud mean square error (MSE) loss and a visual MSE loss.

9. The method of claim 8, wherein the calculating the loss based on the sample point cloud modal uncertainty map and the sample visual modal uncertainty map comprises:
inputting (503) the sample point cloud BEV feature into a point cloud modal detector (603), to calculate a point cloud foreground detection loss;
inputting (504) the sample visual BEV feature into a visual modal detector (604), to calculate a visual foreground detection loss;
calculating (505) the point cloud MSE loss based on the point cloud foreground detection loss and the sample point cloud modal uncertainty map; and
calculating (506) the visual MSE loss based on the visual foreground detection loss and the sample visual modal uncertainty map.

10. The method of claim 9, wherein the inputting the sample point cloud BEV feature into the point cloud modal detector (603) to calculate the point cloud foreground detection loss comprises:
splitting the point cloud modal detector (603) into a point cloud heatmap encoder and a point cloud object detector;
inputting the sample point cloud BEV feature into the point cloud heatmap encoder, to obtain a sample point cloud modal existence map; and
activating the point cloud modal existence map through an activation function and calculating the point cloud foreground detection loss by using cross entropy.

11. The method of claim 9, wherein the inputting the sample visual BEV feature into the visual modal detector (604) to calculate the visual foreground detection loss comprises:
splitting the visual modal detector (604) into a visual heatmap encoder and a visual object detector;
inputting the sample visual BEV feature into the visual heatmap encoder, to obtain a sample visual modal existence map; and
activating the visual modal existence map through an activation function and calculating the visual foreground detection loss by using cross entropy.

12. An electronic device, comprising:
at least one processor; and
a memory communicatively coupled to the at least one processor; wherein
the memory stores instructions executable by the at least one processor, and the instructions, when executed by the at least one processor, cause the at least one processor to perform the method of any one of claims 1 to 6 or claims 7 to 11.

13. A non-transitory computer-readable storage medium storing computer instructions, wherein the computer instructions are configured to cause a computer to perform the method of any one of claims 1 to 6 or claims 7 to 11.

14. A computer program product comprising a computer program, wherein the computer program, when executed by a processor, implements the method of any one of claims 1 to 6 or claims 7 to 11.

15. An autonomous driving vehicle, comprising the electronic device of claim 12.
